# EUROPEAN PATENT APPLICATION

(11) **EP 4 350 819 A1**
(43) Date of publication of application: **10.04.2024**
(21) Application number: 22816191.5
(22) Date of filing: 02.06.2022
(51) Int. Cl.: H01M 8/04, H01M 8/04313, H01M 8/0444, H01M 8/04694

(54) **ION ANALYSIS DEVICE AND FUEL CELL EVALUATION SYSTEM**

(30) Priority: 04.06.2021 JP 2021094607
(71) Applicant: HORIBA, Ltd., Kyoto-shi, Kyoto 601-8510 (JP); HORIBA Advanced Techno, Co., Ltd., Kyoto 601-8551 (JP)
(72) Inventor: OKADA, Yoichi, Kyoto-shi, Kyoto 601-8510 (JP); TANAKA, Yoshinori, Kyoto-shi, Kyoto 601-8510 (JP); SASAI, Kohei, Kyoto-shi, Kyoto 601-8510 (JP); WATANABE, Shunta, Kyoto-shi, Kyoto 601-8510 (JP); MIYAMURA, Kazuhiro, Kyoto-shi, Kyoto 601-8551 (JP)
(74) Representative: Müller Hoffmann & Partner
(86) International application number: PCT/JP2022/022465
(87) International publication number: WO 2022/255446

(57) **Abstract**

An object of the present invention is to provide a fuel cell evaluation system capable of evaluating a condition of a fuel cell that changes from moment to moment as responsively as possible, through a measurement of an ion concentration, and capable of minimizing effects such as those of a reduced measurement accuracy due to a shortage of the condensate or a temporary increase in the amount of condensate, on the ion concentration measurement, in a fuel cell evaluation using an ion concentration measurement of exhaust water discharged from the fuel cell. An ion analysis device includes: a sampling unit configured to sample condensate of exhaust gas flowing through an exhaust gas line in a fuel cell; and a sensor unit configured to measure an ion concentration of the condensate, in which the sampling unit is configured to sample the condensate of the exhaust gas from a first reservoir that is provided to the exhaust gas line and where the condensate of the exhaust gas is collected, or to sample the exhaust gas from the exhaust gas line and to collect condensate of the sampled exhaust gas in a second reservoir.

## Description

### Technical Field

The present invention relates to a fuel cell evaluation system and an ion analysis device used in the fuel cell evaluation system.

### Background Art

As a method for evaluating the condition of a fuel cell, there is a method for examining the type of ion species being discharged from the fuel cell by analyzing the concentration of the ions dissolved in water, among the components contained in exhaust gas discharged from the fuel cell.

In this evaluation method, conventionally, as described in Patent Literature 1 and Patent Literature 2, a constant amount of condensate, mainly composed of the water condensed from the exhaust gas discharged from the fuel cell, is collected in a reservoir provided to an exhaust gas line. The concentrations of ions in the condensate are then measured, using an ion concentration sensor that is disposed in contact with the condensate in the reservoir.

However, the moisture content of the exhaust gas from the fuel cell changes depending on various conditions of power generation, e.g., internal reactions and temperature distributions in the fuel cell. Therefore, merely with the ion concentrations in a constant amount of condensate collected in a reservoir provided to the exhaust gas line, only a rough evaluation of the condition, e.g., the tendency of the deterioration of the fuel cell, is possible.

In addition, because the concentrations are measured from condensate generated from the entire exhaust gas flowing through the exhaust gas line, the measurements may be affected greatly by the changes in the flow rate or the moisture content of the exhaust gas. For example, sometimes the ion concentrations might not be measured accurately when exhaust gas having a low moisture content is being discharged, because the reservoir fails to collect a sufficient amount of condensate, or while exhaust gas having a high moisture content is temporarily being discharged, because the condensate collected in the reservoir becomes diluted, and prevents the changes in the condition of the fuel cell from being reflected immediately to the ion concentrations of the condensate collected in the reservoir.

### Citation List

### Patent Literature

Patent Literature 1: JP 2006-78226A
Patent Literature 2: JP 2006-49146A

### Summary of Invention

### Technical Problem

The present invention has been made in consideration of the problem described above, and an object of the present invention is to provide a fuel cell evaluation system capable of evaluating a condition of a fuel cell that changes from moment to moment as responsively as possible, through a measurement of an ion concentration, and capable of minimizing effects such as those of a reduced measurement accuracy due to a shortage of the condensate or a temporary increase in the amount of condensate, on the ion concentration measurement, in a fuel cell evaluation using an ion concentration measurement of exhaust water discharged from the fuel cell.

### Solution to Problem

In other words, an ion analysis device includes: a sampling unit configured to sample condensate of exhaust gas flowing through an exhaust gas line in a fuel cell; and a sensor unit configured to measure an ion concentration of the condensate, in which the sampling unit is configured to sample the condensate of the exhaust gas from a first reservoir that is provided to the exhaust gas line and where the condensate of the exhaust gas is collected, or to sample the exhaust gas from the exhaust gas line and to collect condensate of the sampled exhaust gas in a second reservoir.

With such an ion analysis device, the condensate of the exhaust gas is sampled from the first reservoir that is provided in the exhaust gas line and in which the condensate is collected, or the exhaust gas is sampled from the exhaust gas line and the condensate of the sampled exhaust gas is collected in the second reservoir. Therefore, it is possible to sample a small amount of condensate generated from a part of the exhaust gas flowing through the exhaust gas line, and to supply the sampled condensate to the sensor unit. As a result, it is possible to ensure that the sensor unit keeps receiving the condensate reflecting a change in the condition of the fuel cell more responsively than conventionally possible, in an amount sufficient for the ion concentration measurement, without being affected by the flow rate or the moisture content of the exhaust gas flowing through the exhaust gas line.

In addition, because a part of condensate generated from the exhaust gas flowing through the exhaust gas line can be sampled in a small amount, or to sample a part of the exhaust gas flowing through the exhaust gas line, and to supply a small amount of condensate generated from the sampled exhaust gas to the sensor unit, as described above, the sensor unit can be supplied with the condensate at a stable flow rate. As a result, it is possible to minimize effects such as those of a reduced measurement accuracy due to a shortage of the condensate supplied to the sensor unit or a temporary increase in the amount of the condensate supplied to the sensor unit, on the ion concentration measurements.

As a specific embodiment, the sampling unit may include a feed path configured to guide the condensate from the second reservoir to the sensor unit.

Preferably, the second reservoir is a gas-liquid separator having a gas-liquid separation function. In this manner, the configuration of the ion analysis device can be made as simple as possible.

A specific example of the first reservoir includes a reservoir provided at a corner of an L-shaped pipe provided in the exhaust gas line.

In order to detect the condition of the fuel cell as responsively as possible, the capacity of the first reservoir or the second reservoir is preferably 0.01 ml or more and 10 ml or less.

Preferably, the ion analysis device further includes a liquid level sensor configured to detect a liquid level in the first reservoir or the second reservoir, and a liquid level control unit configured to control the liquid level of the condensate collected in the first reservoir or the second reservoir based on an output signal from the liquid level sensor, in order to prevent a reduction in the accuracy of the ion concentration measurements due to a shortage in the amount of the condensate collected in the reservoir because exhaust gas having a low moisture content is being discharged, or to prevent temporary dilution of the condensate collected in the reservoir because the exhaust gas having a high moisture content is being discharged.

By configuring to drain the condensate from the first reservoir or the second reservoir when the liquid level control unit determines that the liquid level of the condensate collected in the first reservoir or the second reservoir is excessive, even when the moisture content of the exhaust gas temporarily increases, for example, it is possible to suppress an excessive amount of the condensate from being collected in the first reservoir or the second reservoir. As a result, it becomes possible to avoid a situation in which the condensate collected in the first reservoir or the second reservoir becomes diluted so that the change in the condition of the fuel cell is prevented from being reflected to the ion concentration of the condensate, as much as possible.

By configuring the ion analysis device to further include a gas-liquid separator disposed between the exhaust gas line and the sensor unit, and configured to remove air bubbles from the condensate to be supplied to the sensor unit, it is possible to suppress the chances of air bubbles getting into the sensor unit, so that the effect of air bubbles to the ion concentration measurement can be minimized.

For example, in a configuration in which a separate gas analysis device or the like is provided downstream of the exhaust gas line to analyze the exhaust gas, it is preferable for the gas to be subjected to the analysis to include as much condensate having already been sampled by the sampling unit as possible, or as much gas included in the exhaust gas as possible. Therefore, the gas-liquid separator may include: an exhaust port configured to discharge the gas from inside of the gas-liquid separator to outside, a return path connecting the exhaust port to the exhaust gas line, at a position downstream of a connection at which the sampling unit is connected to the exhaust gas line, and upstream of the gas analysis device; and a return pump configured to send gas from the return path to the exhaust gas line.

By further including a temperature adjustment unit configured to adjust a temperature of the exhaust gas or the condensate flowing between the exhaust gas line and the sensor unit, it is possible to suppress a change in the temperature of the exhaust gas or the exhaust gas condensate flowing through a line from the exhaust gas line to the sensor unit, and to minimize the air bubbles in the condensate to be guided into the sensor unit.

The sensor unit preferably detects concentrations of a plurality of respective ion species.

As an example of a specific configuration for detecting the concentrations of a plurality of respective ion species, a feed path configured to guide the condensate from the first reservoir or the second reservoir to the sensor unit may have an end, on the side of the sensor unit, branched into branch ends, and each of the branch ends may be provided with a sensor unit configured to detect a concentration of corresponding one of ion species that are mutually different.

Furthermore, the feed path configured to guide the condensate from the first reservoir or the second reservoir to the sensor unit may have an end, on the side of the sensor unit, branched into branch ends, and at least one of the branch ends may have a connection port to which a liquid feed pipe for feeding the liquid to another analysis device is connectable.

The present invention also includes a fuel cell evaluation system that further includes a determination unit configured to determine the condition of the fuel cell based on an analysis result of the ion analysis device.

### Advantageous Effects of Invention

As described above, according to the present invention, it is possible to evaluate a change in the condition of the fuel cell more responsively, as compared with a configuration that measures the ion concentration of a constant amount of the condensate collected in the reservoir that is provided to the exhaust gas line.

It is also easier to supply the constant amount of condensate into the ion concentration sensor, compared with the configuration in which the ion concentration sensor directly measures the condensate collected in the reservoir provided to the exhaust gas line. As a result, it is possible to minimize effects such as those of a reduced measurement accuracy due to a shortage of the condensate or a temporary increase in the amount of the condensate, on the ion concentration measurements.

### Brief Description of Drawings

FIG. 1 is an overall schematic diagram of a fuel cell evaluation system according to a first embodiment of the present invention.
FIG. 2 is an overall schematic diagram of an ion analysis device according to the first embodiment of the present invention.
FIG. 3 is a schematic diagram illustrating a first reservoir in the ion analysis device according to the first embodiment of the present invention.
FIG. 4 is an overall schematic diagram of an ion analysis device according to a second embodiment of the present invention.
FIG. 5 is an overall schematic diagram of an ion analysis device according to a third embodiment of the present invention.
FIG. 6 is an overall schematic diagram of an ion analysis device according to a fourth embodiment of the present invention.
FIG. 7 is an overall schematic diagram of an ion analysis device according to a fifth embodiment of the present invention.
FIG. 8 is an overall schematic diagram of an ion analysis device according to a sixth embodiment of the present invention.
FIG. 9 is an overall schematic diagram of a fuel cell evaluation system according to another embodiment of the present invention.

### Description of Embodiments

### <First embodiment>

A fuel cell evaluation system according to a first embodiment of the present invention will now be explained with reference to some drawings. Note that the configurations that are redundant across the embodiments are assigned with the same reference signs, and descriptions thereof will be omitted.

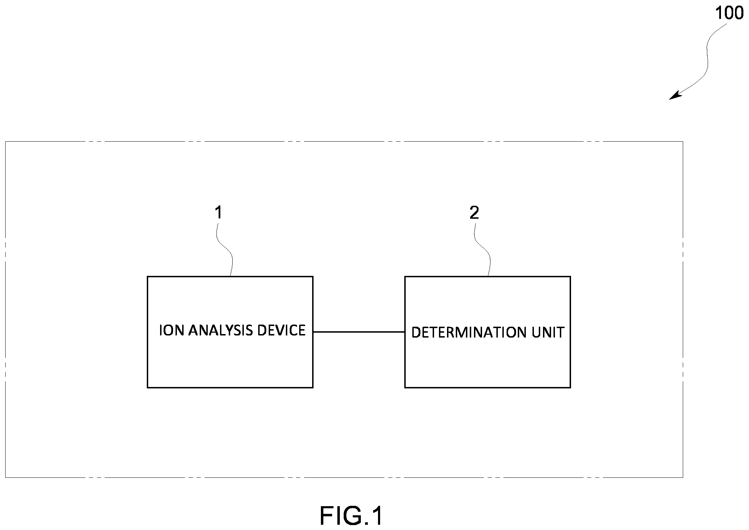

A fuel cell evaluation system 100 according to the present exemplary embodiment includes, for example, as illustrated in FIG. 1, an ion analysis device 1 configured to analyze at least an ion contained in gas discharged from a fuel cell FC; and a determination unit 2 configured to evaluate the condition of the fuel cell FC, based on an analysis result of the ion analysis device 1.

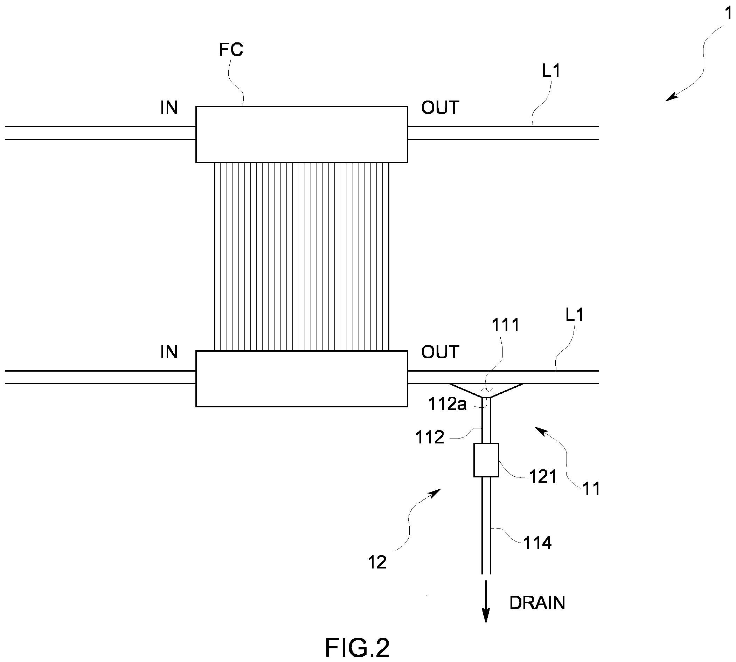

For example, as illustrated in FIG. 2, the ion analysis device 1 includes a sampling unit 11 configured to sample condensate S of the exhaust gas discharged from the fuel cell FC, and a sensor unit 12 configured to measure the ion concentration of the condensate S collected by the sampling unit 11.

In this embodiment, as illustrated in FIG. 2, the sampling unit 11 is configured to collect a sample of the condensate S in a first reservoir 111 provided to an exhaust gas line L1 on a side of an anode and/or a cathode of the fuel cell FC, and to supply the condensate S into the sensor unit 12. The sampling unit 11 includes a feed path 112 for guiding the condensate collected in the first reservoir to the sensor unit.

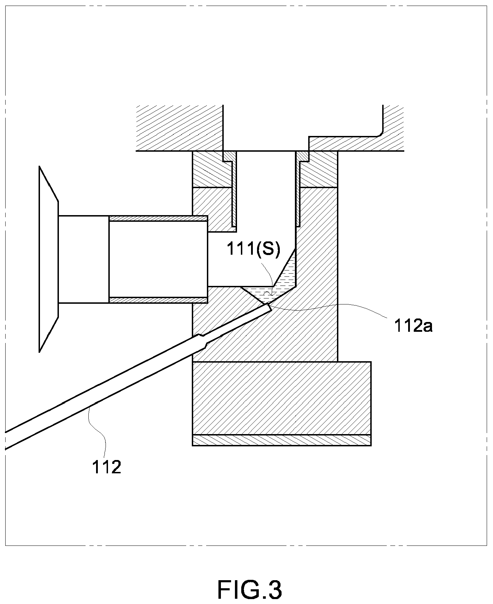

In this embodiment, as illustrated in FIG. 3, the first reservoir 111 is provided at a corner of an L-shaped pipe forming a part of the exhaust gas line L1. The position and the shape of the first reservoir 111 are not limited to any particular position and shape, but preferably, the first reservoir 111 has a tapered bottom surface so that the condensate S can be collected to the lowest (lower) part of the first reservoir 111 by the gravity, for example. The capacity of the first reservoir 111 is not limited to a particular capacity, but is more preferably 0.01 ml or more and 10 ml or less, for example.

The feed path 112 is provided in a manner branched out from the exhaust gas line L1, for example, and is provided as a capillary tube, for example, connecting a collection port 112a extending downwards from the lowest part of the tapered bottom surface of the first reservoir 111, to the sensor unit 12.

The sensor unit 12 includes, for example, at least a measurement line connected to the feed path 112, and an electrode unit 121 including a measurement electrode and a comparison electrode for measuring the ion concentration of the condensate flowing through the measurement line.

Preferably, the measurement line is, for example, a capillary-like line, and the flow rate of the condensate S flowing through the measurement line is 0.01 ml/min or higher and 0.5 ml/min or lower, for example.

Examples of the measurement electrode and the comparative electrode include, but are not limited to, those configured to measure pH. The ion to be measured may be changed as appropriate, depending on the type of the fuel cell FC. For example, one or more ions selected from the group consisting of pH, fluorine ions, carbonate ions, and the like may be measured.

Preferably, the measurement electrode is an electrode that is connected to the measurement line and including a capillary electrode through which the condensate S can flow, or a flat electrode not blocking the measurement line so that the measurements can be made with as little condensate S as possible.

One example of a method of analyzing ions contained in the exhaust gas using the ion analysis device 1 having such a configuration will be described below.

A part of the condensate S is collected as a sample in the first reservoir 111 and sent to the sensor unit 12 by the sampling unit, and, after having the ion concentration measured, the condensate S is drained to the outside via a drainage path 114 to which the sensor unit is connected, for example. Information on the ion concentrations measured by the sensor unit 12 is sent to the determination unit 2, and the determination unit 2 determines the condition of the fuel cell FC based on the ion concentration information received from the sensor unit 12. For example, in relation to the concentrations of various ions, such as pH measured by the sensor unit 12, thresholds or the like for determining the condition of the fuel cell FC may be stored in advance in the determination unit or a storage unit provided separately from the determination unit, and the determination unit 2 may be caused to determine the condition such as a deterioration of the fuel cell FC, based on whether the ion concentrations exceed the respective thresholds.

With the ion analysis device 1 and the fuel cell evaluation system 100 having the configurations as described above, the following effects can be achieved.

Because the ion analysis device 1 includes the sampling unit 11 configured to sample the condensate S from the first reservoir 111, the condensate S can be supplied stably to the sensor unit 12 even when the flow rate or the moisture content of the exhaust gas discharged from the fuel cell FC is high or low.

With this embodiment, because the feed path 112 included in the sampling unit is capillary, the amount of the condensate S corresponding to the inner diameter of the capillary can be guided into the measurement line of the sensor unit 12 at a flow rate in the range of 0.01 ml/min or higher and 0.5 ml/min or lower, by the pressure inside the exhaust gas line L1 or by the weight of the condensate S itself.

In addition, because the sensor unit 12 is capable of measuring the ion concentration of the condensate S at a very low flow rate, such as 0.01 ml/min or higher and 0.5 ml/min or lower, the ions contained in the exhaust gas can be analyzed for each unit cell in the fuel cell FC.

Because the condensate S is sampled via the collection port 112a extending downwards from the lowest part of the bottom surface of the first reservoir 111, it is possible to suppress the effect of the air bubbles on the ion concentration measurement, as compared with a configuration in which the sensor unit 12 is directly disposed in the first reservoir 111.

### <Second embodiment>

A fuel cell evaluation system according to a second embodiment of the present invention will be explained next, with reference to some drawings. Note that the configurations that are redundant across the embodiments are assigned with the same reference signs, and descriptions thereof will be omitted.

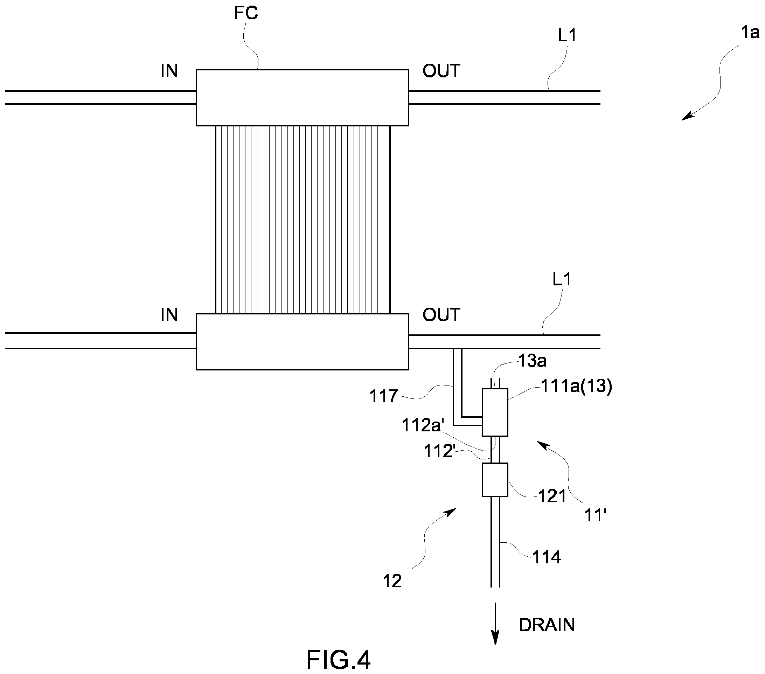

As illustrated in FIG. 4, an ion analysis device 1a included in the fuel cell evaluation system 100 according to this embodiment samples the exhaust gas from the exhaust gas line L1 on the side of the anode and/or the cathode of the fuel cell FC, and collects the condensate S of the sampled exhaust gas in a second reservoir 111a.

In the explanation herein, the reservoir of the condensate in the first embodiment is referred to as a first reservoir, and the reservoir in the second embodiment is referred to as a second reservoir. However, these terms "first" and "second" are given merely for convenience of distinguishing these reservoirs, and the terms "first" and "second" do not have a specific meaning, such as an order.

A sampling unit 11' included in the ion analysis device 1a includes, for example, a sampling line 117 configured to sample the exhaust gas from the exhaust gas line L1, a second reservoir 111a configured to collect the condensate S of the sample exhaust gas sampled via the sampling line 117, and a feed path 112' configured to guide the condensate S collected in the second reservoir 111a into the sensor unit 12.

The sampling line 117 in this embodiment is provided in a manner branched out from the exhaust gas line L1 through which the exhaust gas from the fuel cell FC flows. In this embodiment, the gas-liquid separator 13 provided to the sampling line 117 to separate and remove air bubbles from the condensate S to be supplied into the sensor unit 12 serves as the second reservoir 111a.

The gas-liquid separator 13 has a space for accumulating gas as well as the condensate S. An exhaust port 13a for discharging gas via the ceiling of the space is provided to an upper part of the space, and air bubbles separated from the condensate are discharged to the outside via this exhaust port 13a. The amount of the condensate S that can be collected in the gas-liquid separator 13 is preferably 0.01 ml or more and 4 ml or less.

The feed path 112' is provided as a capillary tube connecting the collection port 112a' provided on the bottom surface of the gas-liquid separator 13 and the sensor unit 12.

With the ion analysis device 1a configured as described above, because the gas-liquid separator 13 is used as the second reservoir 111a, it is not necessary to provide the second reservoir 111a separately, and the ion analysis device 1a can be configured as simple as possible.

### <Third embodiment>

A fuel cell evaluation system according to a third embodiment of the present invention will now be explained with reference to the drawings. Note that the configurations that are redundant across the embodiments are assigned with the same reference signs, and descriptions thereof will be omitted.

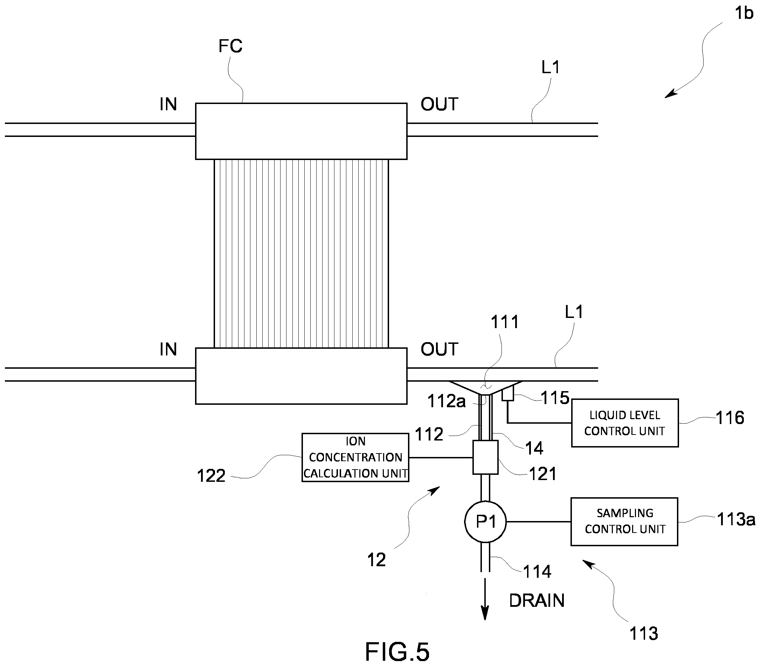

As illustrated in FIG. 5, in addition to the configurations in the ion analysis device 1 according to the first embodiment described above, the ion analysis device 1b included in the fuel cell evaluation system 100 according to this embodiment further includes a circulating mechanism 113 configured to circulate the condensate S into the feed path 112, a liquid level detection unit 115 configured to detect the level of the liquid collected in the first reservoir 111, and a liquid level control unit 116 configured to control the liquid level of the condensate S to be collected in the first reservoir 111 based on the liquid level of the condensate S detected by the liquid level detection unit 115.

The circulating mechanism 113 includes, for example, a pump P1 installed on the feed path 112 or the drainage path 114, and a sampling control unit 113a that controls the operation of the pump P1. Preferably, the sampling control unit 113a causes the pump P1 to operate continuously or intermittently so that the condensate S flows through the feed path 112 at a flow rate of 0.01 ml/min or higher and 0.5 ml/min or lower, for example.

For example, an information processing device including a CPU, a memory, an A/D converter, a D/A converter, and the like performs the function of the sampling control unit 113a, and the function of the sampling control unit 113a is exerted by causing the CPU and peripheral devices to cooperate with each other, in accordance with a program stored in a predetermined area of the memory.

The liquid level detection unit 115 is, for example, a general-purpose liquid level sensor disposed inside the first reservoir 111.

For example, when the liquid level of the first reservoir 111 detected by the liquid level detection unit 115 is higher than a preset liquid level, the liquid level control unit 116 issues a command to the sampling control unit 113a described above, and drives to cause the pump P1 to discharge the condensate S from the first reservoir 111 via the feed path 112 and the drainage path 114. The information processing device described above exerts the function as the liquid level detection unit 115.

The sensor unit 12 includes, for example, a measurement line connected to the feed path 112; the electrode unit 121 including a measurement electrode and a comparison electrode for measuring the ion concentration of the condensate flowing through the measurement line; and an ion concentration calculation unit 122.

The ion concentration calculation unit 122 calculates the ion concentration, the pH, and the like, based on a value output from the electrode unit 121. The information processing device exerts the function of the ion concentration calculation unit 122.

The ion analysis device 1b according to this embodiment further includes a temperature adjustment unit 14 configured to adjust the temperature of the condensate S sampled by the sampling unit 11.

The temperature adjustment unit 14 is, for example, a heat retaining member disposed in a manner covering the feed path 112 described above, and prevents the temperature of the condensate S flowing through the feed path 112 from changing greatly, with respect to the temperature in the first reservoir 111.

With the fuel cell evaluation system 100 including the ion analysis device 1b having the configuration described above, the following effects can be achieved.

Because the pump P1 is used to sample the condensate S from the first reservoir 111, the condensate S collected in the first reservoir 111 can be constantly replenished with fresh condensate. In this manner, the condition of the fuel cell FC can be reflected to the condensate S collected in and sampled from the first reservoir 111 as quickly as possible. Ion concentrations calculated by the ion analysis device 1b can be affected by the temperature of the condensate to be supplied to the sensor unit 12. Therefore, the temperature adjustment unit 14 is provided to suppress the changes in the temperature of the condensate to be supplied to the sensor unit. In this manner, the accuracy of the ion concentration measurements obtained by the ion analysis device 1b can be further improved.

Because the liquid level sensor 115 configured to detect the liquid level in the first reservoir 111 is provided, sampling can be stopped when the liquid level drops below a predetermined liquid level. When the liquid level in the first reservoir 111 is higher than the predetermined liquid level, the condensate S is discharged from the first reservoir 111 so that the change in the condition of the fuel cell FC is reflected to the condensate S collected in the first reservoir 111, as responsively as possible.

### <Fourth embodiment>

A fuel cell evaluation system according to a fourth embodiment of the present invention will now be explained with reference to the drawings. Note that the configurations that are redundant across the embodiments are assigned with the same reference signs, and descriptions thereof will be omitted.

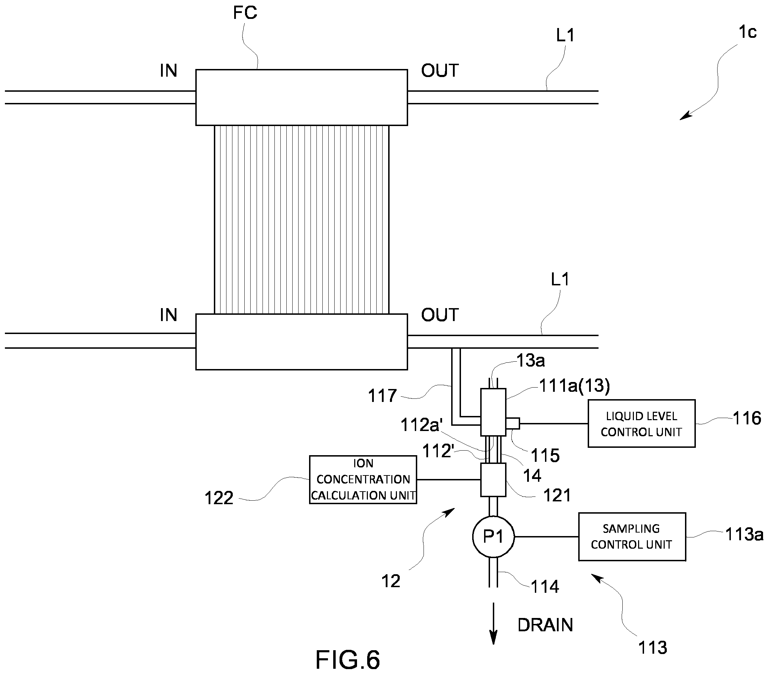

As illustrated in FIG. 6, an ion analysis device 1c included in a fuel cell evaluation system 100 according to this embodiment further includes a circulating mechanism 113 that controls the flow of the condensate S in the feed path 112', in addition to the configurations in the ion analysis device 1a according to the second embodiment described above.

The circulating mechanism 113 includes a pump P1 and a sampling control unit 113a that controls the operation of the pump P1. The pump P1 is connected either to a feed path 112' or to a drainage path 114 for draining the condensate S having subjected to the measurement of the sensor unit 12 to the outside. The drainage path 114 is connected downstream of the feed path 112'.

Preferably, the sampling control unit 113a causes the pump P1 to operate continuously or intermittently so that the condensate S flows through the feed path 112' at a flow rate of 0.01 ml/min or higher and 0.5 ml/min or lower, for example.

The ion analysis device 1c according to this embodiment may further include, for example, the liquid level detection unit 115, the liquid level control unit 116, the ion concentration calculation unit 122, the temperature adjustment unit 14, and the like described in the third embodiment, in addition to the components described above.

With the fuel cell evaluation system 100 including the ion analysis device 1c having the configuration described above, the following effects can be achieved.

Because the pump P1 is used to sample the condensate S from the second reservoir 111a, the condensate S collected in the second reservoir 111a can be constantly replenished with fresh condensate. In this manner, the condition of the fuel cell FC can be reflected to the condensate S collected in and sampled from the second reservoir 111a as quickly as possible.

### <Fifth embodiment>

A fuel cell evaluation system according to a fifth embodiment of the present invention will now be explained with reference to the drawings. Note that the configurations that are redundant across the embodiments are assigned with the same reference signs, and descriptions thereof will be omitted.

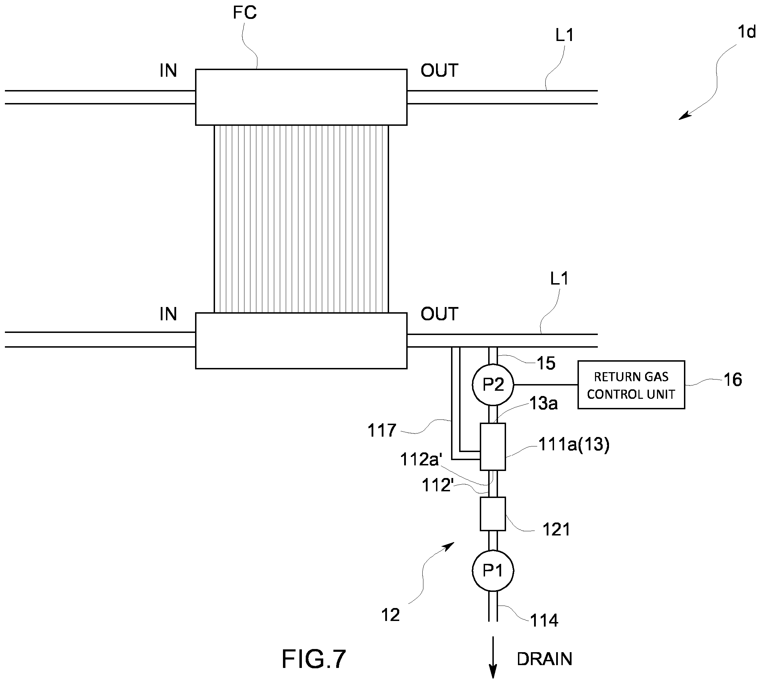

As illustrated in FIG. 7, this ion analysis device 1d included in a fuel cell evaluation system 100 according to this embodiment includes, in addition to the configurations of the ion analysis devices 1a, 1c according to the second embodiment or the fourth embodiment described above, a return path 15 connecting an exhaust port 13a of the gas-liquid separator 13 to the exhaust gas line L1, at a position downstream of a connection at which the sampling unit 11 is connected to the exhaust gas line L1, and a return pump P2 configured to send the gas from the return path 15 into the exhaust gas line L1. The information processing circuit described above may also function as a return gas control unit 16, and control the return pump P2, for example.

With such an ion analysis device 1d, in a configuration in which a separate gas analysis device or the like is provided downstream of the exhaust gas line L1 to make an analysis of the exhaust gas, for example, it is possible to maximize the total amount of exhaust gas subjected to the analysis of the gas analysis device or the like, by including the gas in the condensate S or the exhaust gas sampled by the sampling unit 11 as much as possible.

### <Sixth embodiment>

A fuel cell evaluation system according to a sixth embodiment of the present invention will now be explained with reference to the drawings. Note that the configurations that are redundant across the embodiments are assigned with the same reference signs, and descriptions thereof will be omitted.

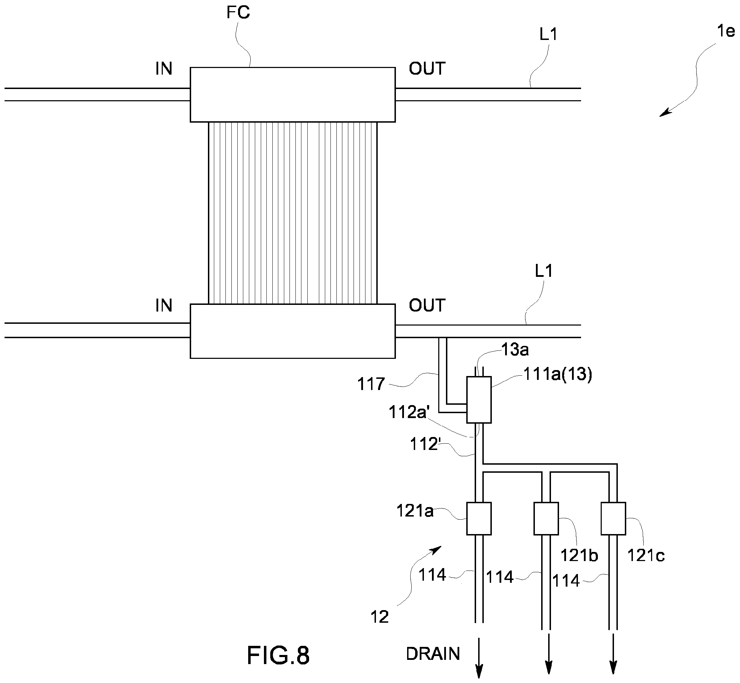

As illustrated in FIG. 8, this ion analysis device 1e included in a fuel cell evaluation system 100 according to this embodiment includes, in addition to the configurations of the ion analysis device 1, 1a, 1b, 1c, or 1d according to the first to fifth embodiments described above, the feed path 112, 112' having one end, on the side of the sensor unit 12, branched into a plurality of branch ends, and each of the plurality of branch ends has an electrode unit 121a, 121b, 121c configured to detect the concentration of corresponding one of ion species that are mutually different.

With this fuel cell evaluation system 100 including the ion analysis device 1e having the configuration described above, it is possible to detect a change in the concentrations of a plurality of ion species contained in the condensate S simultaneously in parallel, and therefore, it is possible to evaluate a change in the condition of the fuel cell FC more in detail.

### <Other embodiments>

The present invention is not limited to the embodiments described above.

For example, the ion analysis device may have a feed path 112, 112' with one end, on side of the sensor unit 12, branched into a plurality of branch ends, as in the sixth embodiment described above, and at least one of the branch ends may have a connection port that is connectable with a liquid feed pipe for feeding liquid to another analysis device.

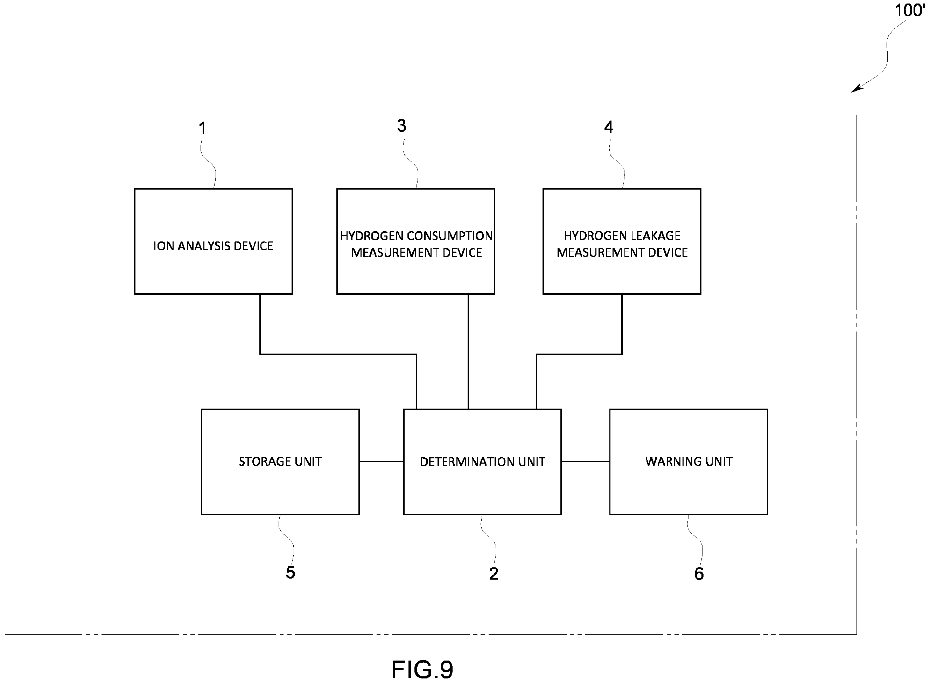

A fuel cell evaluation system 100' may also include, in addition to the ion analysis device 1, a hydrogen consumption measurement device 3 configured to measure the hydrogen consumption in the fuel cell FC, and a hydrogen leakage measurement device 4 configured to measure the amount of hydrogen leakage from the fuel cell, for example, as illustrated in FIG. 9. The fuel cell evaluation system 100' may also include a control unit configured to control the operations of these various measurement devices and analysis devices, a storage unit 5 configured to store therein measurement data output from these various measurement devices and analysis devices, and a warning unit 6 that issues a warning when the determination unit 2 determines that the fuel cell FC deviates from its normal condition based on the measurement data.

With such a configuration, the determination unit 2 may make an evaluation of the fuel cell FC, by integrating information from the hydrogen consumption measurement device 3, the hydrogen leakage measurement device 4, and the like, as well as the information from the ion analysis device 1, and determining the condition of the fuel cell FC, e.g., conditions of the operations and deteriorations.

In the ion analysis device configured to sample the exhaust gas from the exhaust gas line through which the exhaust gas from the fuel cell flows, and to collect condensate of the sampled exhaust gas in the second reservoir, as in the second embodiment, the ion analysis device may include a measurement electrode and a comparison electrode having shapes used by inserting these electrodes into the second reservoir.

In such a configuration, the ion concentration can be measured by providing the second reservoir with insertion ports for inserting the measurement electrode and the comparison electrode into the second reservoir, respectively, by inserting the measurement electrode and the comparison electrode into the second reservoir via the respective insertion ports, and by bringing the electrodes into contact with the condensate collected in the second reservoir.

In such a configuration, in order to detect a change in the condition of the fuel cell, as a change in the ion concentration, highly responsively, it is preferable, for the second reservoir, too, to have a condensate capacity of 0.01 ml or more and 10 ml or less.

In the ion analysis device having the configuration described above, because the measurement electrode and the comparison electrode are used by directly inserting the electrodes into the second reservoir, these electrodes can also be removed from the second reservoir for maintenance.

The first reservoir is not limited to one artificially formed as the reservoir, and a portion where the condensate of the exhaust gas becomes collected may be used as the first reservoir as it is. In this manner, the ion analysis device does not necessarily need to include the first reservoir as an essential component.

The ion analysis device configured to sample the condensate from the first reservoir, as in the first embodiment, may further include a gas-liquid separator disposed on the feed path.

The second reservoir may be provided separately from the gas-liquid separator, or the ion analysis device may include both the second reservoir and the gas-liquid separator.

As described above, in the configuration in which both the first reservoir and the gas-liquid separator are provided, or in a configuration in which the second reservoir and the gas-liquid separator are provided separately, it is preferable for the total amount of the condensate collected in the plurality of reservoirs to be 10 ml or less.

The sensor unit may be configured to measure the concentration of one type of ion, or to measure the concentrations of a plurality of types of ions. In a configuration in which the sensor unit measures the concentrations of a plurality of types of ions, a plurality of sampling lines or feed paths connecting the first reservoir or the second reservoir and the sensor unit may be provided, or a sampling line or a feed path may be branched into a plurality of paths at a position prior to the sensor unit.

In addition, various modifications and combinations of the embodiment may also be made within the scope not deviating from the gist of the present invention.

### Industrial Applicability

According to the present invention, it is possible to provide a fuel cell evaluation system capable of evaluating a condition of a fuel cell that changes from moment to moment as responsively as possible, through a measurement of an ion concentration, and capable of minimizing effects such as those of a reduced measurement accuracy due to a shortage of the condensate or a temporary increase in the amount of condensate, on the ion concentration measurement, in a fuel cell evaluation using an ion concentration measurement of exhaust water discharged from the fuel cell.

### Reference Signs List

- FC: fuel cell
- L1: exhaust gas line
- S: condensate
- 100, 100': fuel cell evaluation system
- 1, 1a, 1b, 1c, 1d, 1e: ion analysis device
- 11, 11': sampling unit
- 111: first reservoir
- 111a: second reservoir
- 112, 112': feed path
- 112a: collection port
- 113: circulating mechanism
- 113a: sampling control unit
- 114: drainage path
- 115: liquid level sensor
- 116: liquid level control unit
- 117: sampling line
- 12: sensor unit
- 121, 121a, 121b, 121c: electrode unit
- 122: ion concentration calculation unit
- 13: gas-liquid separator
- 13a: exhaust port
- 14: temperature adjustment unit
- 15: return path
- 16: return gas control unit
- 2: determination unit
- 3: hydrogen consumption measurement device
- 4: hydrogen leakage measurement device
- 5: storage unit
- 6: warning unit
- P1, P2: pump

## Claims

1. An ion analysis device comprising:
a sampling unit configured to sample condensate of exhaust gas flowing through an exhaust gas line in a fuel cell; and
a sensor unit configured to measure an ion concentration of the condensate, wherein
the sampling unit is configured to sample the condensate of the exhaust gas from a first reservoir that is provided to the exhaust gas line and where the condensate of the exhaust gas is collected, or to sample the exhaust gas from the exhaust gas line and to collect condensate of the sampled exhaust gas in a second reservoir.

2. The ion analysis device according to claim 1, wherein the sampling unit includes a feed path configured to guide the condensate from the second reservoir to the sensor unit.

3. The ion analysis device according to claim 1 or 2, wherein the first reservoir or the second reservoir includes a gas-liquid separation function.

4. The ion analysis device according to any one of claims 1 to 3, wherein the first reservoir is provided at a corner of an L-shaped pipe provided in the exhaust gas line.

5. The ion analysis device according to any one of claims 1 to 4, wherein the first reservoir or the second reservoir has a capacity of 0.01 ml or more and 10 ml or less.

6. The ion analysis device according to any one of claims 1 to 5, further comprising:
a liquid level sensor configured to detect a liquid level in the first reservoir or the second reservoir; and
a liquid level control unit configured to control a liquid level of the condensate collected in the first reservoir or the second reservoir based on an output signal from the liquid level sensor.

7. The ion analysis device according to claim 6, wherein, when the liquid level control unit determines that the liquid level of the condensate collected in the first reservoir or the second reservoir is excessive, the liquid level control unit drains the condensate from the first reservoir or the second reservoir.

8. The ion analysis device according to any one of claims 1 to 7, further comprising a gas-liquid separator disposed between the exhaust gas line and the sensor unit, the gas-liquid separator removing air bubbles from the condensate to be supplied to the sensor unit.

9. The ion analysis device according to claim 8, wherein the gas-liquid separator has an exhaust port configured to discharge gas from inside of the gas-liquid separator to outside.

10. The ion analysis device according to claim 9, further comprising:
a return path connecting the exhaust port and the exhaust gas line, at a position downstream of a connection at which the sampling unit is connected to the exhaust gas line; and
a return pump configured to send gas from the return path to the exhaust gas line.

11. The ion analysis device according to any one of claims 1 to 10, further comprising a temperature adjustment unit configured to adjust a temperature of the exhaust gas or the condensate flowing between the exhaust gas line and the sensor unit.

12. The ion analysis device according to any one of claims 1 to 11, wherein the sensor unit is configured to detect concentrations of a plurality of respective ion species.

13. The ion analysis device according to any one of claims 1 to 12, wherein the feed path configured to guide the condensate from the first reservoir or the second reservoir to the sensor unit has an end, on a side of the sensor unit, branched into branch ends, and each of the branch ends is provided with a sensor unit configured to detect a concentration of corresponding one of ion species that are mutually different.

14. The ion analysis device according to any one of claims 1 to 13, wherein the feed path configured to guide the condensate from the first reservoir or the second reservoir into the sensor unit has an end, on a side of the sensor unit, branched into branch ends, and at least one of the branch ends has a connection port to which a liquid feed pipe for feeding the liquid to another analysis device is connectable.

15. A fuel cell evaluation system comprising:
the ion analysis device according to claims 1 to 14; and
a determination unit configured to determine a condition of the fuel cell based on an analysis result by the ion analysis device.

16. An ion analysis method comprising measuring an ion concentration of condensate generated from exhaust gas discharged from a fuel cell, and collected in and sampled from an exhaust gas line through which the exhaust gas flows, or of condensate generated and collected from exhaust gas sampled from the exhaust gas line.

17. A fuel cell evaluation method comprising determining a condition of the fuel cell based on an analysis result obtained by the ion analysis method according to claim 16.
